# EUROPÄISCHE PATENTSCHRIFT

(11) **EP 1 420 931 B1**
(45) Veröffentlichungstag und Bekanntmachung des Hinweises auf die Patenterteilung: **20.08.2008**
(21) Anmeldenummer: 02794706.8
(22) Anmeldetag: 05.08.2002
(51) Int. Cl.: B29C 47/00, B29C 53/10

(54) **BREMSBARE ROLLEN DER FLACHLEGEEINRICHTUNG EXTRUDIERTER FOLIENSCHLÄUCHE UND VERFAHREN ZUM BETRIEB DESSELBEN**
BRAKABLE ROLLS OF THE LAY-FLAT IMPLEMENT OF EXTRUDED TUBULAR FILMS AND METHOD FOR OPERATING THE SAME
ROULEAUX FREINABLES DU DISPOSITIF DE POSE A PLAT DE FILMS TUBULAIRES EXTRUDES ET PROCEDE PERMETTANT DE LES ACTIONNER

(30) Priorität: 18.08.2001 DE 10140577
(43) Veröffentlichungstag der Anmeldung: 26.05.2004
(73) Patentinhaber: Windmöller & Hölscher KG, 49525 Lengerich (DE)
(72) Erfinder: BACKMANN, Martin, 49525 Lengerich (DE); BECKMANN, Hans-Udo, 58509 Lüdenscheid (DE); FISCHER, Herbert, 48431 Rheine (DE); HAARMANN, Wilfried, 49525 Lengerich (DE)
(86) Internationale Anmeldenummer: PCT/EP2002/008722
(87) Internationale Veröffentlichungsnummer: WO 2003/016023

(56) Entgegenhaltungen:
- DE-B- 1 011 142
- US-A- 5 458 841
- US-A- 5 912 022

## Beschreibung

Die Erfindung betrifft eine Vorrichtung und ein Verfahren nach dem Oberbegriff der Ansprüche 1 beziehungsweise 7. Eine Unrichtung und ein Verfahren diese Art ist beispielsweise aus der US-A-5 912 022 bekannt.

Flachlegevorrichtung der vorgenannten Art finden vor allem in Blasfolienextrusionsanlagen Verwendung. Typischerweise legen sie die gerade extrudierte Folie flach, die nach der Flachlegung noch zusätzlich von einem Abquetschwalzenpaar abgequetscht wird.

Die dieserart flachgelegte Folie durchläuft daraufhin in der Regel eine sogenannte Reversiervorrichtung und wird schließlich von einem folienwickler aufgewickelt.

Bei der Flachlegung der Folie treten jedoch oft Falten auf. Um diese Falten zu vermeiden, wurden daher in der Vergangenheit verschiedene Verfahren erprobt. So wurden die Flachlegeeinrichtungen mit Gleitkörpern mit einer Oberfläche mit einem hohen Haft- oder Gleitreibungskoeffizienten versehen.

Allerdings traten an diesen Oberflächen Beschädigungen der Folie auf und es war darüber hinaus zu beobachten, dass sich die Oberftächeneigenschaften der Gleitkörper schnell veränderten.

Aus diesem Grunde wurden Flachlegeeinrichtungen nach dem Oberbegriff des Anspruchs 1 mit schwergängigen Rollen versehen.

Bei diesem Verfahren zeigte sich, dass sich die Gängigkeit der Rollen im Betrieb änderte, so dass sich keine reproduzierbaren Verhältnisse einstellen ließen, was zu erneuter Faltenbildung führt

Die US 5,912,022 erwähnt einen Folientransport in einer Flachlegeeinrichtung mit bremsbaren Rollen.
Es hat sich gezeigt, dass sich die Faltenbildung mit solchen bremsbaren Rollen einschränken lässt. Jedoch besteht an dieser Stelle nach wie vor Verbesserungsbedarf.

Daher besteht die Aufgabe der vorliegenden Erfindung darin, eine Vorrichtung und ein Verfahren vorzuschlagen, welches die Faltenbildung weiter reduziert.

Die se Aufgabe wird gemäß derErfindung durchdie Vorrichtung nach Anspruch 1 und durch das Verfahren nach Anspruch 7 gelöst. Für die Zwecke dieser Anmeldung wird unter Bremsvorrichtung eine Vorrichtung verstanden, welche die Rollen mit einer Bremskraft beziehungsweise einem Drehmoment beaufschlagt, welches der Förderrichtung der Folie entgegenwirkt oder direkt entgegengerichtet ist.

In diesem Sinne ist auch das Wort Bremskraft in dieser Anmeldung zu verstehen.

Die Beaufschlagung der Rollen mit unterschiedlicher Bremskraft hat überraschende Vorteile für die Folienqualität mit sich gebracht. Sie reduziert die Faltenbildung und macht eine Reihe der nachstehenden Vorteile erst möglich.

Bremsvorrichtungen im Sinne der vorliegenden Druckschrift können mechanische Bremsen sein, es können jedoch auch Wlrbelstrom- oder Hysteresebremsen zum Einsatz kommen.

Die Rollen der Flachlegeeinrichtungen können individuell von jeweils einer Bremsvorrichtung gebremst werden. Oft ist es jedoch insbesondere aus Kostengründen vorteilhaft, wenn mehrere Rollen von einer Bremsvorrichtung gebremst werden. In diesem Fall kann die erwähnte Bremskraft beziehungsweise das bremsende Drehmoment mit mechanischen Mitteln, wie Riemen oder Zahnrädern von der Bremsvorrichtung auf die Rollen beziehungsweise von Rolle zu Rolle übertragen werden. Einzelne Rollen oder mechanisch gekoppelte Rollengruppen können auch mit regelrechten "Antiblockiersystemen" versehen werden, wobei die Drehbewegung der Rollen aufgezeichnet und so geregelt wird, dass die Rollen nicht zum Stillstand kommen. Die Steuerung oder Regelung kann auch so erfolgen, dass eine vorgegebene Geschwindigkeitsdifferenz zwischen der Umfangsgeschwindigkeit der Rollen und der Fördergeschwindigkeit der Folle nicht überschritten wird.

Diese Maßnahmen sind vorteilhaft, um zu verhindern, dass sich an den zu langsam drehenden oder gar stillstehenden Rollen Ablagerungen bilden, welche die Folie verkratzen. Zur Aufzeichnung der Drehung können eine ganze Reihe von Messgeräten wie Initiatoren, Drehgeber oder äquivalente Mittel verwendet werden.

Ebenso vorteilhaft ist die Regelung der Geschwindigkeit einzelner Rollen, Rollengruppen oder gar aller bremsbaren Rollen einer Flachlegeeinrichtung, wenn an bestimmten Stellen des Folienschlauchs Falten auftreten, nachdem dieser mit Rollen in Beruhrung gekommen ist. Zu diesem Zweck kônnen diese Falten beispielsweise von optischen Sensoren, welche bereits in der

Flachlegeeinrichtung oder nach der Flachlegeeinrichtung angebracht sind, detektiert werden. Gegebenenfalls werden die Signale einher Steuervorrichtung zugeführt, welche die Bremskraft der Rollen so herabsetzt (steuert oder regelt), dass die Faltenbildung weitgehend unterbleibt.

Weitere vorteilhafte Ausführungsformen der Erfindung ergeben sich aus den abhângigen Ansprüche. Ein Ausführungsbeispiel der Erfingung ist in der Zeichnung dargestelltund wird im olgenden nâher beschrieben. Die einzelnen Figuren zeigen:
- Fig 1: Eine Skizze einer Blasfolienextrusionsanlage
- Fig 2: Eine Skizze einer Flachlegeeinrichtung mit einer Bremseinrichtung pro Rolle
- Fig 3: Eine Skizze einer Flachlegeeinrichtung mit einer Bremseinrichtung für mehrere Rollen

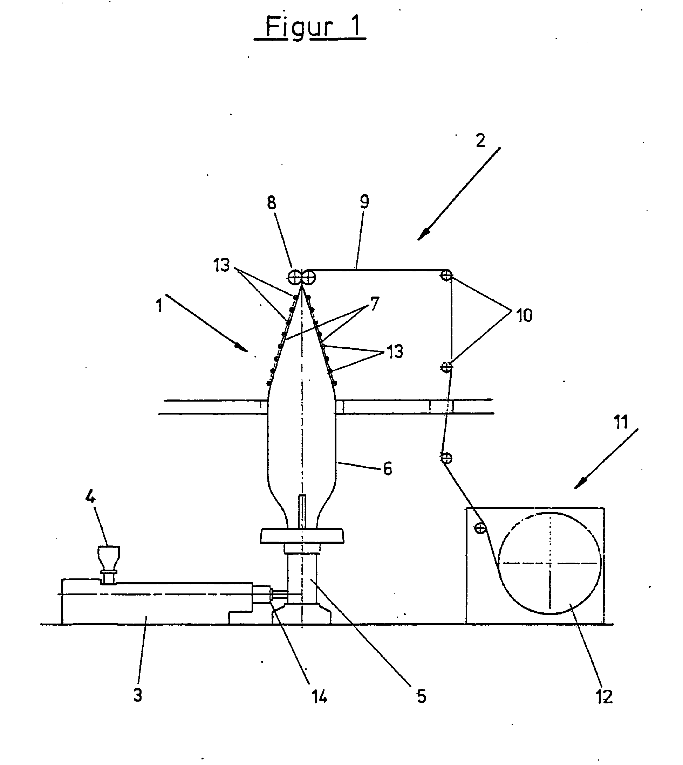

Figur 1 zeigt eine Flachlegevorrichtung 1 welche aus zwei keilförmig gegeneinander angestellten Flachlegeeinrichtungen 7 mit Rollen 13 besteht. Die Flachlegevorrichtung 1 ist ihrerseits Teil einer Blasfolienextrusionsanlage 2 zur Herstellung von Folienschläuchen 6.

Der Materialfluss in der Blasfolienextrusionsanlage beginnt am Versorgungstrichter 4 des Extruders 3 über den dem Extruder 3 Kunststoffrohmaterial - vorzugsweise in Granulatform - zugeführt wird. Bekanntlich überführt der Extruder 3 das nicht dargestellte Rohmaterial in eine zähflüssige Form, welche über den Anschlussstutzen 14 dem Blaskopf 5 zugeführt wird.

Der Blaskopf 5 extrudiert den Folienschlauch 6, der in der Flachlegevorrichtung 1, welche aus zwei keilförmig gegeneinander angestellten Flachlegeeinrichtungen 7 besteht, flachgelegt wird. Die Abquetschwalzen 8 quetschen die flachgelegte Folie 9 zusätzlich ab. Die flachgelegte Folie läuft über Rollen 10 zur Wickelvorrichtung 11 und wird dort auf die Rolle 12 aufgewickelt.

Blasfolienextrusionsanlagen dieser Art sind seit langem bekannt und daher in allen möglichen Ausführungsformen vorhanden. So ist es mittlerweile gebräuchlich, die flachgelegte Folie 9 nach dem Abquetschen zunächst einer sogenannten Reversiervorrichtung zuzuführen, um die Wickelqualität zu verbessern. Eine solche Vorrichtung ist in dem dargestellten Beispiel nicht gezeigt.

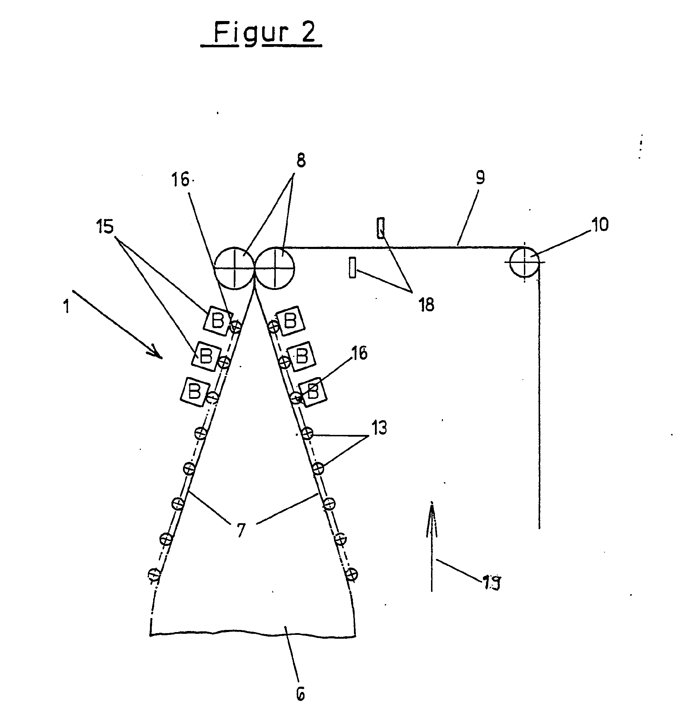

Figur 2 zeigt die Flachlegevorrichtung 1 mit zwei keilförmig zueinander angeordneten Flachlegeeinrichtungen 7, welche auch Flachlegeplatten 7genannt werden. Der Folienschlauch 6 läuft in Vorschubrichtung der Folie, welche durch den Pfeil 19 dargestellt ist, durch die Flachlegevorrichtung 1 und gleitet dabei an den Rollen 13 entlang. Den gebremsten Rollen 16 ist jeweils eine Bremsvorrichtung 15 zugeordnet. In Figur 2 sind auch zwei Sensoren 18 gezeigt, welche ober- und unterhalb der flachgelegten Folie 9 gehaltert sind. Diese Sensoren untersuchen die Folie auf Beschädigungen und Falten. Es handelt sich vorzugsweise um optische Sensoren. Solche Sensoren können auch zwischen den Rollen 16 oder Rollengruppen angeordnet werden. Solche Anordnungen erleichtern die Zuordnung der Beschädigungen oder Falten zu den verursachenden Rollen.

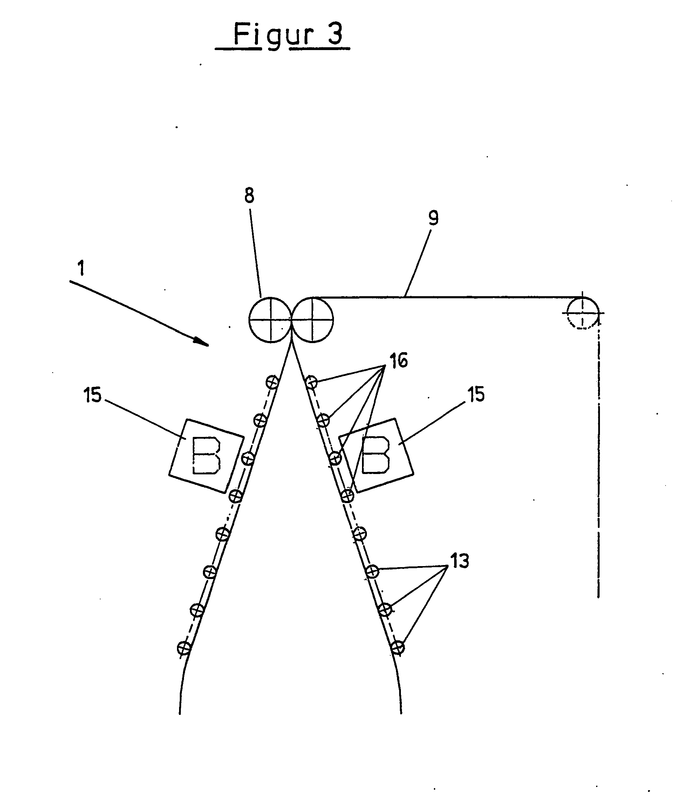

Figur 3 zeigt eine Flachlegevorrichtung 1 mit ungebremsten Rollen 13 und gebremsten Rollen 16. Wobei in diesem Ausführungsbeispiel die gebremsten Rollen einer Flachlegeeinrichtung 7 von jeweils einer Bremsvorrichtung 15 gebremst werden. Die Bremskraft beziehungsweise das Drehmoment wird hier über nicht dargestellte Riemen übertragen. Die von einer Bremsvorrichtung gebremsten Rollen gehören einer Gruppe von Rollen an.

Bei allen drei Figuren wurde auf die Darstellung von Steuer- und

Regeleinrichtungen, Steuerleitungen, Stromkabel und Ähnlichem verzichtet. Auch Vorrichtungen zur Überwachung der Drehung der Rollen wurden aus darstellerischen Gründen nicht gezeigt.

| **Bezugszeichenliste** | |
|---|---|
| 1 | Flachlegevorrichtung |
| 2 | Blasfolienextrusionsanlage |
| 3 | Extruder |
| 4 | Versorgungstrichter |
| 5 | Blaskopf |
| 6 | Folienschlauch |
| 7 | Flachlegeeinrichtung/Flachlegeplatten |
| 8 | Abquetschwalzen |
| 9 | flachgelegte Folie bzw. flachgelegter Folienschlauch |
| 10 | Transportrollen |
| 11 | Wickelvorrichtung |
| 12 | Folienrolle |
| 13 | Rollen |
| 14 | Anschlussstutzen |
| 15 | Bremsvorrichtung |
| 16 | gebremste Rollen |
| 18 | Sensoren |
| 19 | Pfeil in Förderrichtung der Folie |
| 20 | |
| 21 | |
| 22 | |
| 23 | |
| 24 | |
| 25 | |
| 26 | |
| 27 | |
| 28 | |

## Patentansprüche

1. Vorrichtung (1) zum Flachlegen extrudierter Folienschläuche (6), welche aus zumindest zwei Flachlegeeinrichtungen (7) besteht, wobei die zumindest zwei Flachlegeeinrichtungen (7) keilförmig zueinander angestellt und mit Rollen (13, 16) versehen sind, an welchen die Folie beim Flachlegen gleitet,
wobei mindestens ein Teil der Rollen (16) von zumindest einer Bremsvorrichtung (15) mit einer Bremskraft beaufschlagbar ist,
und wobei zumindest eine Rolle (16) oder zumindest eine Gruppe von Rollen (16) mit anderer Bremskraft als die anderen bremsbaren Rollen (16) beaufschlagbar ist
**dadurch gekennzeichnet, dass**
zumindest eine Rolle (16) oder zumindest eine Gruppe von Rollen (16) mit einer Vorrichtung zur Überwachung ihrer Drehung ausgestattet ist.

2. Vorrichtung nach Anspruch 1
**dadurch gekennzeichnet, dass**
zumindest eine Bremsvorrichtung (15) vorgesehen ist, welche mehrere Rollen (16) mit einer Bremskraft beaufschlagt.

3. Vorrichtung nach Anspruch 1
**dadurch gekennzeichnet, dass**
für jede mit einer Bremskraft beaufschlagbare Rolle (16) jeweils ei-ne Bremsvorrichtung (15) vorgesehen ist.

4. Vorrichtung nach einem der vorangegangenen Ansprüche
**dadurch gekennzeichnet dass**
zumindest eine Bremsvorrichtung (15) eine Wirbelstrombremse ist.

5. Vorrichtung nach einem der vorangegangenen Ansprüche
**dadurch gekennzeichnet dass**
zumindest eine Bremsvorrichtung (15) eine Hysteresebremse ist.

6. Vorrichtung nach einem der vorangegangenen Ansprüche
**gekennzeichnet durch**
Sensoren (18) zum Untersuchen der Folie, welche die Folie auf Beschädigungen - insbesondere Kratzer oder Falten - untersuchen, nachdem die Folie Kontakt mit zumindest einer Rolle (13, 16) gehabt hat.

7. Verfahren zum Flachlegen extrudierter Folienschläuche (6), zwischen zumindest zwei Flachlegeeinrichtungen (7),
wobei die zumindest zwei Flachlegeeinrichtungen (7) keilförmig zueinander angestellt und mit Rollen (13, 16) versehen sind, an welchen die Folie beim Flachlegen gleitet,
wobei mindestens ein Teil der Rollen (16) von zumindest einer Bremsvorrichtung (15) gebremst wird,
wobei zumindest eine Rolle (16) oder zumindest eine Gruppe von Rollen (16) mit anderer Bremskraft als die anderen bremsbaren Rollen (16) beaufschlagt wird.**dadurch gekennzeichnet, dass**
die Drehung zumindest eine Rolle (16) oder zumindest eine Grup-pen von Rollen (16) mittels einer Vorrichtung überwacht wird.

8. Verfahren nach dem vorstehenden Anspruch
**dadurch gekennzeichnet,**
**dass** Vorrichtungen zur Überwachung der Drehung zumindest einer Rolle (16) oder zumindest einer Gruppe von Rollen (16) den Stillstand der zugeordneten zumindest einen Rolle oder Rollengruppe melden und
**dass** die Bremsvorrichtung (15) der Rolle (16) oder Rollengruppe die Bremskraft so senkt, dass die Drehung der Rolle oder Rollengruppe wieder beginnt.

9. Verfahren nach Anspruch 7
**dadurch gekennzeichnet,**
**dass** Vorrichtungen zur Aufzeichnung der Umfangsgeschwindigkeit zumindest einer Rolle (16) oder zumindest einer Gruppe von Rollen (16) vorgesehen sind,
**welche** diese Umfangsgeschwindigkeit einer Steuer- oder Regeleinrichtung melden und
**dass** die Steuer- oder Regeleinrichtung diese Umfangsgeschwindigkeit mit der Fördergeschwindigkeit der Folie vergleicht
**und** die Bremsvorrichtung (15) der Rolle (16) oder Rollengruppe die Bremskraft so senkt,
**dass** die Differenz zwischen Umfangs- und Fördergeschwindigkeit einen vorgegebenen Wert nicht überschreitet beziehungsweise einhält.

10. Verfahren nach Anspruch 7
**dadurch gekennzeichnet, dass**
Sensoren (18) zum Untersuchen der Folie auf Beschädigungen vorgesehen sind,
**welche** in Förderrichtung (19) der Folie hinter einer Rolle (16), Rollengruppe oder hinter allen Rollen (13, 16) einer Flachlegeein-richtung (7) vorgesehen sind
**und** welche Beschädigungen der Folie melden,
**woraufhin** die Bremskraft der den Sensoren zugeordneten Rolle (16), Rollengruppe oder aller bremsbaren Rollen (16) einer Flachlegeeinrichtung (7) derart herabgesetzt wird, dass die Beschädigungen unterbleiben.

## Claims

1. Device (1) to lay flat extruded film tubes (6), comprising of at least two lay-flat equipments (7), whereby the at least two lay-flat equipments (7) are arranged wedge-shaped to each other and are equipped with rollers (13, 16) on which the foil slides during it is layed flat,
whereby at least a part of the rollers (16) is charged with braking force with at least one brake mechanism (15),
and whereby at least one roller (16) or at least a group of rollers (17) are charged with a different braking force than the other rollers (16),
**characterized in that**
at least one roller (16) or at least a group of rollers (17) is equipped with a device for the control of its rotation.

2. Device according to claim 1,
**characterized in that**
at least one braking mechanism (15) is provided which charges several rollers (16) with a braking force.

3. Device according to claim 1,
**characterized in that**
one braking mechanism (15) is provided for each roller (16) which has to be charged with a braking force.

4. Device according to one of the preceding claims,
**characterized in that**
at least one braking mechanism (15) is an eddy-current brake.

5. Device according to one of the preceding claims,
**characterized in that**
at lease one braking mechanism (15) is a hysteresis brake.

6. Device according to one of the preceding claims,
**characterized by**
sensors (18) to inspect the foil which inspect the foil regarding damages - especially scratches and folds - after the foil has had a contact with at least one roller (13, 16).

7. Process to lay flat extruded film tubes (6), between at least two lay-flat equipments (7),
whereby the at least two lay-flat equipments (7) are arranged wedge-shaped to each other and are equipped with rollers (13, 16) at which the foil slides when it is layed flat whereby at least a part of the rollers (16) of at least one brake mechanism (15) is charged with a braking force by at least one braking mechanism (15)
and whereby at least one roller (16) or at least a group of rollers (16) are charged with different braking force than the other rollers (16) which can be braked,
**characterized in that**
the rotation of at least one roller (16) or at least a group of rollers (16) is inspected by means of a device.

8. Process according to the preceding claim,
**characterized in that**
the devices for the control of the rotation of at least one roller (16) or at least a group of rollers (17) signals the standstill of the assigned at least one roller or group of rollers and
that the braking mechanism (15) of the roller (16) or group of rollers (17) reduces the braking force in such a way that the rotation of the roller or group of rollers starts again.

9. Process according to claim 7,
**characterized in that**
devices to measure the rotating speed of the at least one roller (16) or the at least group of rollers (17) are provided,
**which** sends this rotating speed to a control unit and
**that** the control unit compares this rotating speed to the conveying speed of the foil, **and** that the baking mechanism (15) of the roller (16) or group of rollers reduces the braking force in such a way
**that** the difference between the rotating and conveying speed does not exceed but keep a preset value.

10. Process according to claim 7,
**characterized in that**
sensors (18) are provided to check the foil regarding to damages,
**which** (18) are provided in conveying direction (19) of the foil behind a roller (16) roller group (17) or behind all rollers (13, 16, 17)) of a lay flat equipment (7)
**and** which signal damages of the foil
**whereupon** the braking force of the roller (16), roller group (17) or all rollers (13, 16, 17) of a lay flat equipment (7) which can be braked related to the sensors are reduced in such a way that damages are avoided.

## Revendications

1. Dispositif (1) pour poser à plat des films tubulaires extrudés (6), qui est constitué d'au moins deux installations de pose à plat (7),
où au moins deux installations de pose à plat (7) sont disposées en forme de coin l'une relativement à l'autre et sont pourvues de rouleaux (13, 16) le long desquels la feuille glisse lors de la pose à plat,
où au moins une partie des rouleaux (16) peut être chargée par au moins un dispositif de freinage (15) avec une force de freinage, et où au moins un rouleau (16) ou au moins un groupe de rouleaux (16) peut être chargé avec une autre force de freinage que les autres rouleaux freinables (16) ,
**caractérisé en ce qu'**au moins un rouleau (16) ou au moins un groupe de rouleaux (16) est muni d'un dispositif pour la surveillance de sa rotation.

2. Dispositif selon la revendication 1, **caractérisé en ce qu'**au moins un dispositif de freinage (15) est prévu qui charge plusieurs rouleaux (16) avec une force de freinage.

3. Dispositif selon la revendication 1, **caractérisé en ce qu'**il est prévu pour chaque rouleau (16) pouvant être chargé avec une force de freinage à chaque fois un dispositif de freinage (15).

4. Dispositif selon l'une des revendications précédentes, **caractérisé en ce qu'**au moins un dispositif de freinage (15) est un frein à courants parasites.

5. Dispositif selon l'une des revendications précédentes, **caractérisé en ce qu'**au moins un dispositif de freinage (15) est un frein à hystérésis.

6. Dispositif selon l'une des revendications précédentes, **caractérisé par** des capteurs (18) pour examiner la feuille, qui examinent la feuille en vue d'endommagements - en particulier éraflures ou plis - après que la feuille a été en contact avec au moins un rouleau (13, 16).

7. Procédé de pose à plat de films tubulaires extrudés (6) entre au moins deux installations de pose à plat (7),
où au moins deux installations de pose à plat (7) sont disposées en forme de coin l'une relativement à l'autre et sont pourvues de rouleaux (13, 16), le long desquels glisse la feuille lors de la pose à plat,
où au moins une partie des rouleaux (16) est freinée par au moins un dispositif de freinage (15),
où au moins un rouleau (16) ou au moins un groupe de rouleaux (16) est chargé avec une autre force de freinage que les autres rouleaux freinables (7),
**caractérisé en ce que** la rotation d'au moins un rouleau (16) ou d'au moins un groupe de rouleaux (16) est surveillée au moyen d'un dispositif.

8. Procédé selon la revendication précédente, **caractérisé en ce que** des dispositifs pour la surveillance de la rotation d'au moins un rouleau (16) ou d'au moins un groupe de rouleaux (16) signalent l'arrêt d'au moins un rouleau ou groupe de rouleaux associé et,
**en ce que** le dispositif de freinage (15) du rouleau (16) ou du groupe de rouleaux diminue la force de freinage de telle sorte que la rotation du rouleau ou du groupe de rouleaux commence à nouveau.

9. Procédé selon la revendication 7, **caractérisé**
**en ce que** des dispositifs pour l'enregistrement de la vitesse périphérique d'au moins un rouleau (16) ou d'au moins un groupe de rouleaux (16) sont prévus,
qui signalent cette vitesse périphérique à une installation de commande ou de régulation et
**en ce que** l'installation de commande ou de régulation compare cette vitesse périphérique avec la vitesse de convoyage de la feuille,
et le dispositif de freinage (15) du rouleau (16) ou du groupe de rouleaux diminue la force de freinage suffisamment pour que la différence entre les vitesses périphérique et de convoyage ne dépasse pas respectivement respecte une valeur prédéfinie.

10. Procédé selon la revendication 7, **caractérisé en ce que** des capteurs (18) pour examiner la feuille en vue d'endommagements sont prévus,
qui sont prévus dans la direction de convoyage (19) de la feuille derrière un rouleau (16), un groupe de rouleaux ou derrière tous les rouleaux (13, 16) d'une installation de pose à plat (7) et qui signalent des endommagements de la feuille,
à la suite de quoi la force de freinage du rouleau (16), groupe de rouleaux ou de tous les rouleaux freinables (16) associés aux capteurs d'une installation de pose à plat (7) est diminuée suffisamment pour que des endommagements n'aient pas lieu.
